# EUROPÄISCHE PATENTSCHRIFT

(11) **EP 0 689 614 B1**
(45) Veröffentlichungstag und Bekanntmachung des Hinweises auf die Patenterteilung: **03.05.2000**
(21) Anmeldenummer: 93912782.5
(22) Anmeldetag: 25.05.1993
(51) Int. Cl.: C22B 7/02, C22B 1/243, C22B 1/244, C21C 1/08

(54) **VERFAHREN ZUM BETRIEB EINES KUPOLOFENS UNTER EINSATZ VON BRIKETTS ALS SCHLACKENBILDENDES MATERIAL**
PROCESS FOR OPERATING A CUPOLA FURNACE WHILE USING BRIQUETTES AS A SLAG-FORMING MATERIAL
PROCEDE DE FONCTIONNEMENT D'UN CUBILOT AVEC DES BRIQUETTES COMME MATERIAU GENERATEUR DE LAITIER

(30) Priorität: 16.03.1993 DE 4308294
(43) Veröffentlichungstag der Anmeldung: 03.01.1996
(73) Patentinhaber: Linde Technische Gase GmbH, 82049 Höllriegelskreuth (DE)
(72) Erfinder: BUTSCHEK, Uwe, D-8000 München 70 (DE)
(74) Vertreter: Kasseckert, Rainer
(86) Internationale Anmeldenummer: EP9301308
(87) Internationale Veröffentlichungsnummer: WO9421831

(56) Entgegenhaltungen:
- WO-A-92/05290
- DE-A- 2 401 217
- DE-A- 2 422 619
- DE-A- 3 200 946
- DE-A- 4 109 214
- US-A- 3 567 811
- US-A- 4 141 945
- US-A- 5 100 464
- DATABASE WPI Week 12, 1992 Derwent Publications Ltd., London, GB; AN 92-094709 & SU,A,1 655 900 (IRKUT BR ALUM MAGN/IRKUT ALUMINIUM WKS) 15 June 1991
- DATABASE WPI Week 9, 1991 Derwent Publications Ltd., London, GB; AN 91-064125 & SU,A,1 574 660 (METAL HEAT TECHN RE) 30 June 1990
- DATABASE WPI Week 8, 1977 Derwent Publications Ltd., London, GB; AN 77-13598Y & JP,A,52 003 504 (NISSHIN STEEL KK) 12 January 1977

## Beschreibung

Die Erfindung betrifft ein Verfahren zum Betrieb eines Kupolofens zur Erzeugung von Gußeisen, bei dem der Ofenschacht des Kupolofens mit einem entsprechenden Einsatz und schlackebildendem Material gefüllt ist bzw. nachgefüllt wird, dem Ofenschacht im unteren Bereich Wind, z.B. Luft oder sauerstoffangereicherte Luft, zugeführt wird und im oberen Bereich des Kupolofenschachtes ein mit Staubteilchen angereichertes Abgas (Gichtgas) den Ofen verläßt.

Ein in DE-A-4 109 214 beschriebenes solches Verfahren sieht vor, daß bei der Entstaubung von Abgasen erhaltene SiO₂-haltige Stäube oder sontstige Sande mit einem Gasstrom, z.B. mit dem Ofenwind, staubförmig als Schlackebildner in den Kupolofen eingeführt bzw. rückgeführt werden. Dieses Verfahren unterliegt mengenmäßigen Begrenzungen der Staubzufuhr.

Gerade in Schmelz- und Gießereibetrieben - aber auch in anderen Industriezweigen - fallen heute große Mengen an nicht weiter nutzbaren Stäuben und Sanden an. Beispielsweise erfolgt in der Gußeisenproduktion mittels Kupolöfen in jedem Fall eine sogenannte windzufuhr zu den besagten Kupolöfen, wodurch andererseits eine entsprechende Menge an Abgas aus diesen austritt. Das abzuführende, sogenannte Gichtgas, bestehend aus Verbrennungsgasen und Schadstoffen, muß, bevor es in die Atmosphäre entlassen werden kann, einer Reinigung und Entstaubung unterzogen werden. Die so erhaltenen Filterstäube sind Reststoffe und sind einer (gesonderten) Entsorgung zuzuführen, wobei deren Entnahme und Abtransport zusätzliche Arbeitsabläufe beim Betrieb von Kupolöfen darstellen.

Ein anderer Gesichtspunkt bei Kupolöfen und dem ablaufenden Schmelzprozeß besteht darin, daß, aufgrund des Vorhandenseins immmer reinerer Basismaterialien für die Beschickung solcher Öfen, eine immer geringer werdende Menge an Schlacke zustande kommt. Dies geht soweit, daß u.U. das aus metallurgischen Gründen notwendige Verhältnis von Schlacke zu Eisen unterschritten wird. Zur Gewährleistung eines günstigen Eisen zu Schlacke Verhältnisses bei diesem und ähnlichen Schmelzprozessen wird deshalb auch die Zugabe von zusätzlichen, schlackebildenden Materialien, wie beispielsweise Kieselsteinen, praktiziert. Dies bedeutet jedoch den Einsatz eines weiteren Arbeitsstoffes, der wiederum die Ausführung zusätzlicher Arbeitsschritte bedingt und auch mit weiteren Kosten verbunden ist.

Aus diesen Umständen heraus ergeben sich also Verbesserungswünsche gerade beim Betrieb von Kupolöfen und auch beim Betrieb anderer Metallschmelzöfen, die sich einerseits auf die Entsorgung von anfallenden Sanden und Stäuben beziehen und andererseits den Mangel an Schlacke beim Schmelzprozeß betreffen. Die Aufgabenstellung der vorliegenden Erfindung besteht daher darin, eine Verbesserung eben dieser Verhältnisse zu bewirken.

Der erfindungsgemäße Lösungsvorschlag besteht nun darin,
o daß aus abgefilterten Stäuben und dergleichen gebildete Briketts als Schlackebildner in den Kupolofen eingeführt werden, also Briketts, die im wesentlichen aus hochanteilig SiO₂-haltigen, industriell anfallenden Stäuben oder Sanden, insbesondere abgasfilterstäuben und Gießereisanden, gebildet sind,
o wobei diese Briketts mit dem übrigen Einsatz dem Kupolofen zugeführt werden
o und wobei die Briketts dadurch erhalten werden,
   - daß entsprechende Stäube und Sande gesammelt, vermischt und angefeuchtet werden,
   - daß als Bindemittel 1 bis 10 Gew.% Sulfitablauge oder vergleichbares zudosiert wird und
   - daß diese Gesamtmischung in Formen unter Druck kompaktiert und anschließend ausgehärtet wird.

Der Erfindung liegt die Aufgabe und Idee zugrunde, aus ohnehin anfallenden Materialien, nämlich z.B. den Filterstäuben aus Gichtgas oder aus anderen Abgasen oder auch aus Altsand aus Gießereien, einen nutzbaren und darüber hinaus gut handhabbaren Werkstoff zu gewinnen der in Kupolöfen einsetzbar ist. Dies gelingt mit dem erfindungsgemäßen Kompaktierungsverfahren, wobei insbesondere mit der Anwendung von Sulfitablauge als Bindemittel ein wesentlicher Effekt erzielt wurde, da sich gerade mit diesem Bindemittel ausgezeichnet stabile und feste Briketts aus den besagten Materialien herstellen lassen. Die auf diese Weise gewonnenen Formlinge sind ausgezeichnet handhabbar, transportierbar und dosierbar und weisen eine gute Druck- und Spaltfestigkeit auf.

In JP-A-52003504 und SU-A-1655900 ist die Herstellung von Briketts aus mit Sulfitablauge gebundenem Abfallstaub bzw. aus solchem Staub gemeinsam mit Quarzsand beschrieben. Die briketts werden nach der JP-A in eine mit Metallschmelze zu füllende Pfanne eingegeben, wo eine Reduktion durch C und Si erfolgt, die in der Metallschmelze enthalten sind. Nach der SU-A werden die Briketts in einen Elektroofen eingesetzt, welcher der Herstellung von Silizium aus entsprechendem Erz dient.

Sulfitablauge ist ein Neben- oder Abfallprodukt bei der Gewinnung von Zellstoff, wo es zum Herauslösen des Lignins aus Holz dient, und stellt im wesentlichen eine Lösung von ligninsulfosauren Salzen und Holzzucker dar. Die Erfindung soll sich jedoch auch auf chemisch unmittelbar vergleichbare, eventuell synthetisch hergestellte, Zusammensetzungen erstrecken.

Besonders vorteilhaft wird die Sandmischung für die Brikett erzeugung mit 0.5 bis 5 Gew.% Wasser angefeuchtet. Als Bindemittel werden insbesondere 2 bis 5 Gew-% Sulfitablauge zudosiert.

Die zugeführten Briketts haben vorteilhaft solche äußeren Abmessungen, die der erforderlichen Durchgasung des Kupolofens dienlich sind.

Von günstigen Größenverhältnissen kann ausgegangen werden, wenn die Briketts äußere Abmessungen zwischen 3 und 20 cm haben. Die Kompaktierung erfolgt in Formen und vorteilhaft mit einem Druck, der eine Volumenreduzierung von 1 bis 20 Vol.%, vorzugsweise 5 bis 15 Vol.%, bewirkt.

Vorteilhaft ist ferner, wenn die Aushärtung der kompaktierten Staubmischung in einem Trockenofen unter Luft und unter Temperaturen von 30 bis 100 °C erfolgt. Jedoch ist auch eine Aushärtung unter normalen Umgebungsbedingungen ohne weiteres möglich und effektiv. Es sind Aushärtungszeiten von einigen Stunden bis zu einigen Tagen möglich, wobei dies wesentlich von der Größe und Form der hergestellten Briketts und der Aushärtungstemperatur abhängt.

Zweckmäßig werden die Briketts mit mehr als 90 Gew.% SiO₂-Material gebildet. mit stabiler Form besteht. Die erfindungsgemäß eingesetzten Briketts haben sehr gute Festigkeitswerte, z.B. Druckfestigkeiten von über 200 bis 450 N/cm², und auch gute Spaltfestigkeiten.

Zweckmäßig wird dem Ofenschacht im unteren Bereich als Wird sauerstoffangereicherte Luft zugeführt. Im oberen Schachtbereich verläßt ein mit Staubteilchen angereichtertes Abgas (Gichtgas) den Ofen, welches wie sonstiges, entsprechendes Abgas aus dem kupolofenbenachbarten Bereich, insbesondere aus der Gießerei, einer Entstaubung unterzogen wird. Die aus dem Staub gebildeten Briketts werden als schlackebildendes Material zusammen mit dem übrigen Einsatz dem Kupolofen z.B. über den Begichtungskübel zugeführt werden.

Im folgenden soll die Erfindung beispielhaft näher erläutert werden:
Gemäß der Erfindung werden bspw.im Bereich eines sich in Betrieb befindenden Kupolofens die für die Brikettierung und beabsichtigte Anwendung geeigneten Materialien gesammelt. Dabei sind insbesondere die aus dem Gichtgas des Kupolofens abgefilterten Stäube geeignet - diese enthalten nämlich einen hohen Anteil an dem erwünschten Quarzmaterial (SiO₂).

Ebenso sind Altsande aus der Gießerei und auch andere Filterstäube einsetzbar. Aus diesem gesammelten Staubmaterial wird dann in der Art der Mörtelherstellung mit etwa 4 Gew.% Wasser und 3 Gew.% Sulfitablauge ein Mischgut hergestellt und dieses anschließend in Formen geeigneter Dimensionierung verfüllt. In diesen Formen erfolgt unter Druckeinwirkung die Verdichtung und Kompaktierung des Materials. Direkt im Anschluß daran kann das Material bereits wieder aus der Form entnommen werden, da es bereits in dieser Phase eine ausreichende Formstabilität aufweist. Der so erhaltene Formling muß dann abschließend lediglich eine Aushärtungsphase durchlaufen, die in normaler Umgebung oder beschleunigt in einem Ofen mit etwas erhöhtem Temperaturniveau erfolgen kann.

Zum Kupolofenbetrieb unter erfindungsgemäßem Einsatz von Briketts: In eine Kupolofenanlage mittlerer Größe (Ofendurchmesser 90 cm) wird in der vorbekannten Betriebsweise mehr oder weniger regelmäßig ein Einsatz von 520 kg, etwa bestehend aus 450 kg Eisenmaterial, 54 kg Satzkoks und 16 kg Kalksteine eingebracht. Ebenso erfolgt bei konventioneller Betriebsweise regelmäßig die Zugabe von schlackebildenden Materialien, in der Regel von Kieselsteinen, im vorliegenden Beispiel etwa in der Größenordnung von 25 kg pro Einsatz. Im Standardfall erfolgen dabei etwa 8 bis 15 Gattierungsvorgänge pro Stunde.

Mit der Erfindung ist eine solche, gesonderte Zugabe von Kieselsteinen nicht mehr erforderlich. Die Menge an Filterstaub, die bei der Filterung des aus dem Kupolofen austretenden Gichtgases anfällt, zusammen mit der Menge, die aus der benachbarten Gießerei hinzugenommen werden kann, ist ausreichend, um die notwendige Menge an schlackebildenden Briketts gemäß der Erfindung herzustellen. Anstelle der Kieselsteine wird nunmehr eine adäquate Menge an Briketts, also ebenso etwa 25 kg, jedem Einsatz zugegeben, wobei die Briketts bevorzugt unmittelbar mit dem Einsatz z.B. über den Begichtungskübel in den Kupolofen aufgegeben werden. Beim Absinken des Einsatzes im Kupolofen werden dann die Briketts - wie der übrige Einsatz - erwärmt und schmelzen schließlich auf. Erfindungsgemäß gelingt es auf diese Weise die gewünschte Schlacke zu bilden und ein günstiges Eisen-Schlacke-Verhältnis herzustellen. Die Produktion von Gußeisen ist dabei in gleicher Menge und Qualität gegeben, wie bei der üblichen Verfahrensweise.

Mit der vorliegenden Erfindung werden also nachteilige Verhältnisse beim Betrieb von Kupolöfen in gegenseitig kombinierter und vorteilhafter Weise verbessert, wobei die konventionell zugeführten Schlackebildner eingespart und ohnehin anfallende Reststoffe nutzbringend angewendet werden.

## Patentansprüche

1. Verfahren zum Betrieb eines Kupolofens zur Erzeugung von Gußeisen, bei dem
o der Ofenschacht des Kupolofens mit einem entsprechenden Einsatz und schlackebildendem Material gefüllt ist bzw. nachgefüllt wird,
o dem Ofenschacht im unteren Bereich Wind, z.B. Luft oder sauerstoffangereicherte Luft , zugeführt wird und im oberen Bereich des Kupolofenschachtes ein mit Staubteilchen angereichertes Abgas (Gichtgas) den Ofen verläßt und
die abgefilterten Staubteilchen und/oder vergleichbare Stäube als schlackebildendes Material in den Kupolofen zurückgeführt werden,
dadurch gekennzeichnet,
o daß aus besagten Stäuben gebildete Briketts als Schlackebildner in den Kupolofen eingeführt werden, also Briketts, die im wesentlichen aus hochanteilig SiO₂-haltigen, industriell anfallenden Stäuben oder Sanden, insbesondere Abgasfilterstäuben und Gießereisanden, gebildet sind,
o wobei diese Briketts mit dem übrigen Einsatz dem Kupolofen zugeführt werden
o und wobei die Briketts dadurch erhalten werden,
- daß entsprechende Stäube und Sande gesammelt, vermischt und angefeuchtet werden,
- daß als Bindemittel 1 bis 10 Gew.% Sulfitablauge oder vergleichbares zudosiert wird und
- daß diese Gesamtmischung in Formen unter Druck kompaktiert und anschließend ausgehärtet wird.

2. Verfahren nach Anspruch 1, dadurch gekennzeichnet, daß die Sandmischung für die Briketterzeugung mit 0,5 bis 5 Gew.% Wasser angefeuchtet wird

3. Verfahren nach Anspruch 1 oder 2, dadurch gekennzeichnet, daß als Bindemittel bei der Briketterzeugung 2 bis 5 Gew.% Sulfitablauge zudosiert wird.

4. Verfahren nach einem der Ansprüche 1 bis 3, dadurch gekennzeichnet, daß solche Briketts hergestellt werden, die der erforderlichen Durchgasung des Kupolofens dienlich sind, nämlich mit äußeren Abmessungen zwischen 3 und 20 cm.

5. Verfahren nach einem der Ansprüche 1 bis 4, dadurch gekennzeichnet, daß die Kompaktierung in Formen mit einem Druck durchgeführt wird, der eine Volumenreduzierung von 5 bis 20 Vol.% bewirkt.

6. Verfahren nach einem der Ansprüche 1 bis 5, dadurch gekennzeichnet, daß die Aushärtung der kompaktierten Staub/Sand/Bindemittelmischung in einem Trocknungsofen unter Luft und unter Temperaturen von 30 bis 100°C erfolgt.

7. Verfahren nach einem der Ansprüche 1 bis 6, dadurch gekennzeichnet, daß die Briketts mit mehr als 90 Gew.% SiO₂-Material gebildet werden.

8. Verfahren nach einem der Ansprüche 1 bis 7, dadurch gekennzeichnet, daß als Wind sauerstoffangereicherte Luft zugeführt wird.

## Claims

1. Process for operating a cupola furnace for producing cast iron, in which
• the furnace shaft of the cupola furnace is filled or prefilled with a suitable charge and slag-forming material,
• wind, for example air or oxygen-enriched air, is fed to the furnace shaft in the lower area, and in the upper area of the cupola-furnace shaft a flue gas (furnace gas) which is enriched with dust particles leaves the furnace, and
the filtered-out dust particles and/or similar dusts are returned to the cupola furnace as slag-forming material,
characterized
• in that briquettes formed from the said dusts are introduced into the cupola furnace as slag-forming constituents, i.e. briquettes which are formed substantially from industrially formed dusts or sands which have a high SiO₂ content, in particular flue-gas filter dusts and foundry sands,
• these briquettes being fed to the cupola furnace together with the remaining charge,
• and the briquettes being obtained in the following way
- appropriate dusts and sands are collected, mixed and moistened,
- from 1 to 10% by weight sulphite lye or the like is metered in as a binder, and
- this complete mixture is compacted under pressure in moulds and is then set.

2. Process according to Claim 1, characterized in that the sand mixture for producing briquettes is moistened with from 0.5 to 5% by weight of water.

3. Process according to Claim 1 or 2, characterized in that from 2 to 5% by weight of sulphite lye is metered in as binder during production of the briquettes.

4. Process according to one of Claims 1 to 3, characterized in that the briquettes produced assist with the required gas distribution in the cupola furnace, namely by having outer dimensions of between 3 and 20 cm.

5. Process according to one of Claims 1 to 4, characterized in that the compacting in moulds is carried out at a pressure which results in a volume reduction of from 5 to 20% by volume.

6. Process according to one of Claims 1 to 5, characterized in that the compacted dust/sand/binder mixture is set in a drying furnace under air and at temperatures of from 30 to 100°C.

7. Process according to one of Claims 1 to 6, characterized in that the briquettes are formed using more than 90% by weight SiO₂ material.

8. Process according to one of Claims 1 to 7, characterized in that oxygen-enriched air is supplied as the wind.

## Revendications

1. Procédé de fonctionnement d'un cubilot en vue de la production de fonte de fer,
* lors duquel le puits de four du cubilot est rempli ou est rempli à nouveau à l'aide d'une charge correspondante et d'un matériau formant des scories,
* lors duquel l'on achemine au puits de four dans la partie inférieure du vent, par exemple de l'air ou de l'air enrichi en oxygène et lors duquel, dans la partie supérieure du puits du cubilot, gaz de rejet enrichi eu particules de poussière (gaz de gueulard) quitte le four et les particules de poussières, éliminées par filtration, et/ou des poussières comparables, sont reconduites en tant que matériau formant des scories dans le cubilot,
caractérisé en ce que
* des briquettes formées à partir desdites poussières sont introduites en tant que fondant de scorification dans le cubilot, à savoir des briquettes qui sont formées, pour l'essentiel, de poussières ou de sables d'origine industrielle, contenant de fortes teneurs en SiO2, en particulier des poussières de filtres de gaz de rejet et des sables de fonderie,
* ces briquettes étant acheminées au cubilot avec la charge restante
* et ces briquettes étant obtenues
- par collecte, mélange et humidification des poussières et des sables correspondants,
- par dosage avec, en tant que liant, de 1 à 10 % en poids de solution de sulfite ou d'un produit similaire et
- par compactage sous pression dans des moules et durcissement subséquent de ce mélange global.

2. Procédé selon la revendication 1, caractérisé en ce que le mélange de sable est humidifié pour la production de briquettes à l'aide de 0,5 à 5 % en poids d'eau.

3. Procédé selon la revendication 1 ou 2, caractérisé en ce que l'on ajoute par dosage, en tant que liant, lors de la production de briquettes, de 2 à 5 % en poids de solution de sulfite.

4. Procédé selon l'une quelconque des revendications 1 à 3, caractérisé en ce que l'on fabrique des briquettes de ce genre qui sont utiles à la purge au gaz nécessaire du cubilot, notamment avec des dimensions externes comprises entre 3 et 20 cm.

5. Procédé selon l'une quelconque des revendications 1 à 4, caractérisé en ce que le compactage dans des moules est effectué à l'aide d'une pression qui a pour effet une réduction de volume de 5 à 20 % en volume.

6. Procédé selon l'une quelconque des revendications 1 à 5, caractérisé en ce que le durcissement du mélange compacté/tassé de poussière/sable/liant se fait dans un four de séchage à l'air et à des températures de 30 à 100°C.

7. Procédé selon l'une quelconque des revendications 1 à 6, caractérisé en ce que les briquettes sont formées à l'aide de plus de 90 % en poids de matériau SiO₂.

8. Procédé selon l'une quelconque des revendications 1 à 7, caractérisé en ce que l'on introduit, en tant que vent, de l'air enrichi en oxygène.
